# EUROPEAN PATENT SPECIFICATION

(11) **EP 4 129 817 B1**
(45) Date of publication and mention of the grant of the patent: **10.06.2026**
(21) Application number: 21190160.8
(22) Date of filing: 06.08.2021
(51) Int. Cl.: B64C 1/06, F16B 4/00

(54) **METHOD FOR JOINING STRUCTURAL PROFILES**
VERFAHREN ZUM VERBINDEN VON STRUKTURPROFILEN
PROCÉDÉ D'ASSEMBLAGE DE PROFILS DE STRUCTURE

(43) Date of publication of application: 08.02.2023
(73) Proprietor: Airbus Operations GmbH, 21129 Hamburg (DE)
(72) Inventor: BENTHIEN, Hermann, 21129 Hamburg (DE); ZAHLEN, Pierre, 21129 Hamburg (DE); POPPE, Andreas, 21129 Hamburg (DE)
(74) Representative: Isarpatent

(56) References cited:
- EP-A2- 0 219 140
- EP-A2- 2 662 281
- WO-A2-2021/219165
- DE-A1- 102008 010 197
- US-A1- 2006 102 786
- US-A1- 2019 367 147

## Description

The present invention pertains to a method for joining structural profiles. The invention particularly pertains to the joining of curved or angular structural profiles for aircraft.

Although it can be used in many applications, the present invention and the problems underlying it are explained in greater detail in relation to passenger aircraft. However, the methods and devices described can likewise be used in different vehicles and in all sectors of the transport industry, e.g. for road vehicles, for rail vehicles, for general aircraft or for watercraft. Moreover, the invention can be applied to various further technological fields comprising the assembly of wind turbine towers and/or rotor blades, large pipelines, civil engineering and construction objects, e.g. bridge elements, and so on.

Some parts of an aircraft are typically constructed as partially or substantially closed tube- and/or box-like structures, in which an outer skin, shell and/or enclosure is stabilized and stiffened by various inner structural elements like ribs, spars, stringers and so on. One example for a round, oval or elliptical structural tube or barrel is the fuselage, which forms the structural core of an aircraft. An example for a box-like structure is the so-called wingbox of a fixed-wing aircraft, which forms the primary structural load carrying center of the wings and continues beyond the visible wing roots and interfaces with the fuselage. The wingbox is so called since, on many designs, the combination of the forward and rear wing spars and the upper and lower wing skins together form a natural "box" shape running through the wing. Various further components of aircraft are constructed as round or angular profiles, e.g. the empennage with vertical and horizontal tail planes, but also pylons, spoilers, flaps, rudders etc.

Exemplary processes for joining fuselage sections are described in DE 10 2007 055 233 A1, DE 10 2008 010 197 A1, DE 10 2008 013 365 A1, US2019/367147A1, and DE 10 2009 021 369 A1.

Prior art document DE 10 2018 218 039 A1 describes a reinforcing element which allows an improved connection to a round structural profile of an aircraft, in particular to a fuselage section. The reinforcing element comprises a fiber structure having a hollow-cylindrical, helically wound mesh of fiber strands and forming an inner shell surface formed to receive the structural profile and a matrix material into which the fiber strands are respectively embedded and which is formed to be shrinkable by heating so that the fiber structure can be fastened to the structural profile with the inner shell surface by heating the matrix material.

Against this background, it is an object of the present invention to find solutions for assembling structural profiles, which require less mechanical fasteners and other manufacturing tools and lead to a generally reduced assembly effort.

This object is achieved by a method having the features of claim 1.

The idea of the present invention is inspired by the shrink-fitting technique where an interference fit is achieved by a relative size change of the components after assembly. The present invention applies the basic concept to mate larger structural profiles with each other by first shrinking or expanding one or both of the structural profiles and then bringing them together at their mating surfaces before they are brought back to their original size to close the fit. By configuring the relative sizes and dimensions of the components and their mating surfaces appropriately, the tightness of the fit can be set so that both form fits as well as interference fits can be achieved between the components. The fit may then be complemented by fasteners, but in principle the invention makes it possible to mate profiles with each other without any drilling, riveting or the like and without having to use special tools. The mated profiles have matching contours in their original size, which means that they can be moved together without physical contact or the application of forces or pressure once their relative dimensions have been changed appropriately by expansion and/or contraction.

The invention can be utilized to join various curved and/or angular structural parts with each other in order to form larger structural entities, e.g. structural vehicle components, wind turbine parts, pipelines, construction elements and so on. It is to be understood that also more than two parts may be joined together with the approach of the invention, either at the same time or pairwise, one pair after the other. The invention is not limited to round parts but can also be applied to conic or angular shapes (e.g. triangular, box-like and so on). They invention can be used for joining metal parts but also for components formed from other materials, e.g. fiber composites. The controlled deformation of the respective parts can be initiated both from the outside and the inside of the respective component. For example, a fuselage section may be compressed from the outside by elastic deformation. The section may also be expanded from the inside by heating up the component. Elastic deformation and/or temperature can of course also be applied from the respective other direction, e.g. a fuselage section may be shrunk by cooling from the outside. Depending on the application, it may be sufficient to increase or decrease the dimensions of the respective profiles by only a few millimeters or centimeters. In principle it may even be possible to reopen a closed connection between two profiles, in particular if there is a large difference between both profiles in the coefficients for thermal shrinkage and/or expansion.

Advantageous embodiments and improvements of the present invention are found in the subordinate claims.

According to the invention, the size is changed by thermal expansion or contraction.

This may be achieved by heating or cooling one or both components before assembly and allowing then to return to the ambient temperature after assembly, employing the phenomenon of thermal expansion to make a joint. For example, the thermal expansion of one profile may allow to fit the cooler piece to it. As the adjoined pieces reach the same temperature, the joint becomes strained and stronger.

Most materials expand when heated and shrink when cooled. Enveloping parts may be heated and assembled into position while hot, then allowed to cool and contract back to their former size, except for the compression that results from each interfering with the other. Alternatively, or additionally, the enveloped part may be cooled before assembly such that it slides easily into its mating part. Upon warming, it expands and interferes. However, these effects may be reversed for specific materials and components. For example, a thermoelastically shrinkable thermoplastic material may be heated and thereby compressed.

According to an example not within the scope of the claims, the size may be changed by mechanical deformation.

Thermal expansion and/or shrinking hence is not the only possibility to achieve a relative change in dimensions between two profiles. Alternatively, or additionally, one or both component may also be elastically deformed at least in portions, e.g. by applying pressure at certain positions or over a surface.

According to an embodiment of the invention, at least one of the mating contours may be covered by an interface sealant before the size change of the structural profiles is reversed.

For example, certain interface sealants may be used to protect the joint against corrosion. In another example, an adhesive may be used to improve tightness of the connection.

According to the invention, the mating contours are surface structured such that they interlock via complementary formed surface elements when the size change is reversed.

For example, to ensure and/or increase load transfer between the components, the mating surfaces may be structured appropriately in a way that enhances the transfer of shear loads during operation. In principle, the mating contours may have any kind of shape that allows a form fit connection. For example, a wavy surface may provide a fatigue optimized solution. Other suitable surfaces shapes comprise tooth or sawtooth structures, steps, edges, pins and so on.

To improve and control the fit of large assemblies, e.g. aircraft sections, it may be beneficial to rework the respective contact surfaces before mounting (tolerance compensation). Especially for large assemblies the actual shape of both profiles may be measured at least for the mating contours before the assembly so that some manufacturing tolerances may be compensated before and/or during the assembly process.

According to an embodiment of the invention, the structural profiles may be generally circular, oval or elliptical arc or ring cross section at the opening ends.

According to the invention, the structural profiles form part of a primary structure of an aircraft. The structural profiles may particularly form barrel portions of a fuselage.

The invention will be explained in greater detail with reference to exemplary embodiments depicted in the drawings as appended.

The accompanying drawings are included to provide a further understanding of the present invention and are incorporated in and constitute a part of this specification. The drawings illustrate the embodiments of the present invention and together with the description serve to explain the principles of the invention. Other embodiments of the present invention and many of the intended advantages of the present invention will be readily appreciated as they become better understood by reference to the following detailed description. The elements of the drawings are not necessarily to scale relative to each other. In the figures, like reference numerals denote like or functionally like components, unless indicated otherwise.
Fig. 1 to 4 schematically depict cross-sectional views of two structural profiles along an axial direction during different process steps of a method for joining the two structural profiles according to an embodiment of the invention.
Fig. 5 and 6 schematically depict other examples for structural profiles that are joined with the method according to an embodiment of the invention.
Fig. 7 shows a cross-sectional view along a lateral direction of a primary aircraft structure during application of a method according to an embodiment of the invention.
Fig. 8 depicts a schematic flow diagram of the method used in Figs. 1 to 7.

Although specific embodiments are illustrated and described herein, it will be appreciated by those of ordinary skill in the art that a variety of alternate implementations may be substituted for the specific embodiments shown and described.

Generally, this application is intended to cover any adaptations or variations of the specific embodiments discussed herein.

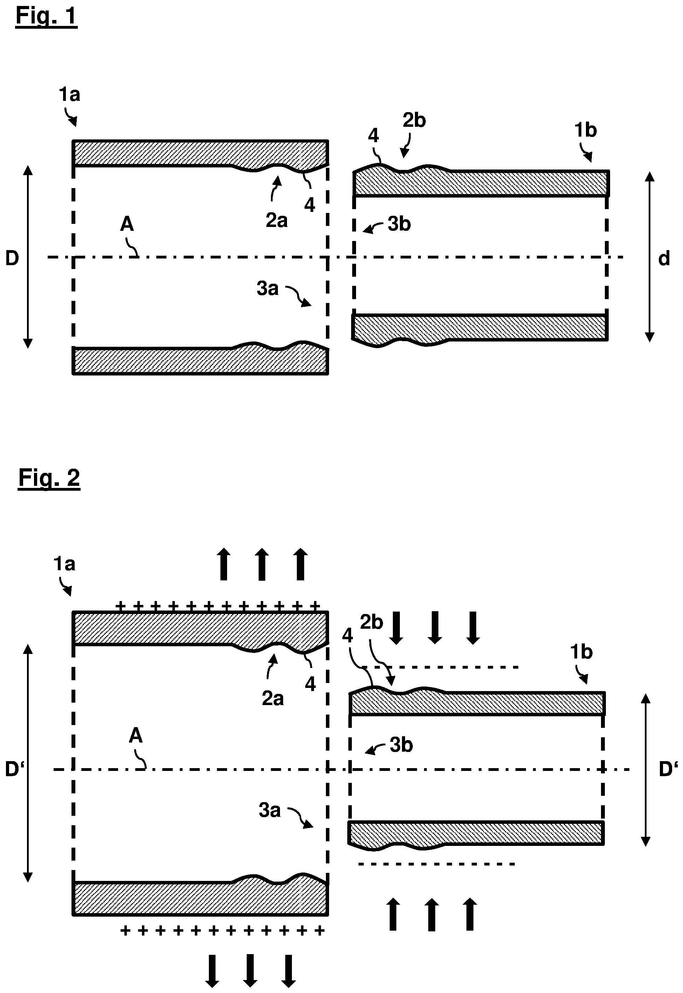

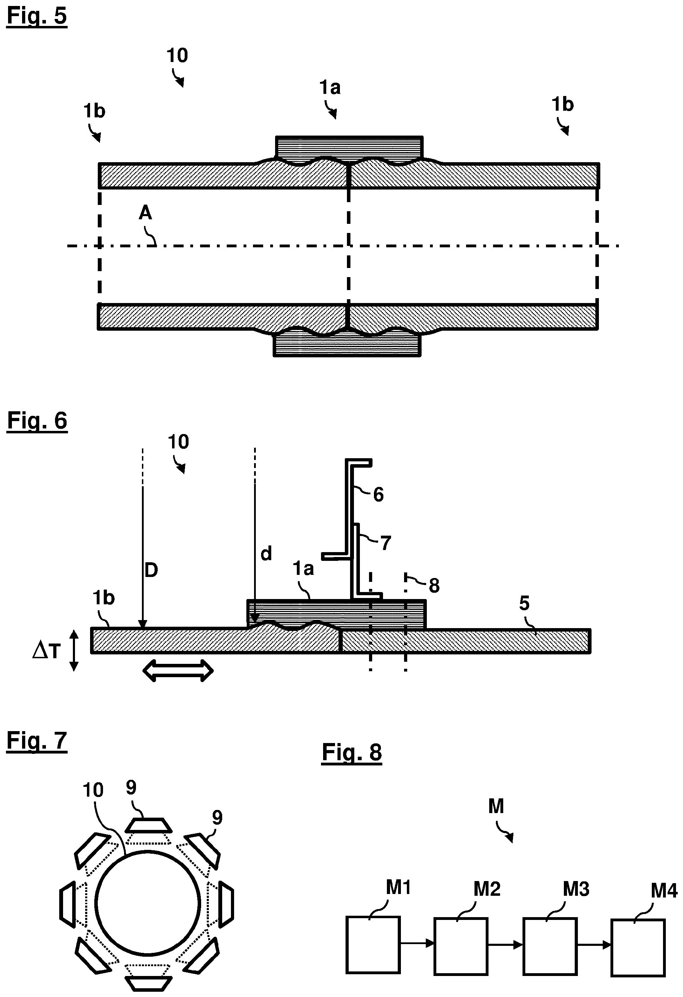

Figures 1 to 4 schematically depict cross-sectional views of two structural profiles 1a, 1b along an axial direction A during different process steps of a method M for joining the two structural profiles 1a, 1b according to an embodiment of the invention. Fig. 8 depicts a schematic flow diagram of the method M.

One particular use case for the method M is the manufacture of aircraft fuselages from a multiplicity of fuselage barrels or barrel segments. Normally, adjacent fuselage barrels are overlapped and then joined with one another in a transverse joint region along a circumferentially running overlap edge. Each barrel segment may be divided along the circumferential direction into two half-shells or even smaller circumferential arc-like portions, which are also joined to each other. Typically, a large number of connecting elements, including butt straps, stringer couplings, clips, brackets and in particular rivets and other fasteners, are required, which may make the assembly process complicated and cumbersome. And more importantly, each of these elements implies an increase in weight and costs of the assembly. In addition, tolerances usually occur between the overlapping edge sections, at least in some sections. Therefore, the sections need to be aligned and the interfaces need to compensate remaining tolerances.

The presently described method M provides a solution to assemble a fuselage or other curved or angular primary aircraft structure, e.g. a closed, box-like and/or concave shaped structure. It is to be understood that the principles of the invention can also be used in other applications where large round, conical and/or angular profiles need to be attached to each other, e.g. rotor blades or towers of wind turbines, the hulls of ships and submarines, trains, pipelines, civil engineering objects etc.

The method M of Fig. 8 comprises under M1 forming a first structural profile 1a with a first mating contour 2a at a first opening end 3a and a second structural profile 1b with a second mating contour 2b at a second opening end 3b, the first mating contour 2a being complementary formed to the second mating contour 2b. With reference to Fig. 1, the first structural profile 1a may be a first fuselage half-shell or arc having an inner diameter D. The second structural profile 1b may be a second fuselage half-shell or arc having an outer diameter d. In another embodiment, the structural profiles 1a, 1b may also be more or less complete barrel sections that are substantially closed along a circumferential direction.

As can be seen in Fig. 1, the first mating contour 2a of the first structural profile 1a is complementary formed to the second mating contour 2b of the second structural profile 1b and the inner diameter D of the first structural profile 1a is similar or equal (except for tolerances) to the outer diameter d of the second structural profile 1b. Both mating contours 2a, 2b are surface structured with complementary formed surface elements 4. In the figures, the surface elements 4 are shown as wavy structures by way of example. It is to be understood however that various other suitable mating structures can be formed on or in the mating contours 2a, 2b including but not limited to steps, tooth or sawtooth structures, pins, undercuts, grooves and so on.

Coming back to Fig. 8, the method M further comprises under M2 changing a size of at least one of the structural profiles 1a, 1b at least at the respective mating contour 2a, 2b by expansion or contraction of the respective structural profile 1a, 1b. In the depicted exemplary embodiment, the size is changed by thermal expansion and contraction of the respective structural profiles 1a, 1b, as can be seen in Fig. 2. The first structural profile 1a is heated up and thereby expanded, while the second structural profile 1b is cooled down and thereby shrunken (arrows in Fig. 2).

Fig. 7 shows an exemplary setup for the application of temperature on a primary aircraft structure 10, e.g. a fuselage section or a barrel segment. As can be seen in the figure, several temperature application devices 9 are placed along the circumference of the primary aircraft structure 10 and are oriented towards it to increase or decrease its temperature.

In one example, the temperature application devices 9 may be heating pads that are placed around the shell of the fuselage 10, e.g. aligned with each stringer position. Other suitable devices comprise amongst others IR radiation heaters, air blowers for cooling or heating, inductive heating devices and so on.

In other examples not according to the claims however, expansion and contraction of the structural profiles 1a, 1b does not necessarily have to rely on a thermal approach. Alternatively, or additionally, the structural profiles 1a, 1b may also be mechanically and/or elastically deformed at least in portion to achieve the same or similar change in inner and/or outer dimensions. For example, pressure bags, as they are known from other aircraft applications, may be placed around a primary aircraft structure 10 much in the same vein as the temperature application devices 9 shown in Fig. 7 in order to deform the primary aircraft structure 10 to the inside. Similarly, such devices may be placed on the inside of the primary aircraft structure 10 to push it radially outwards.

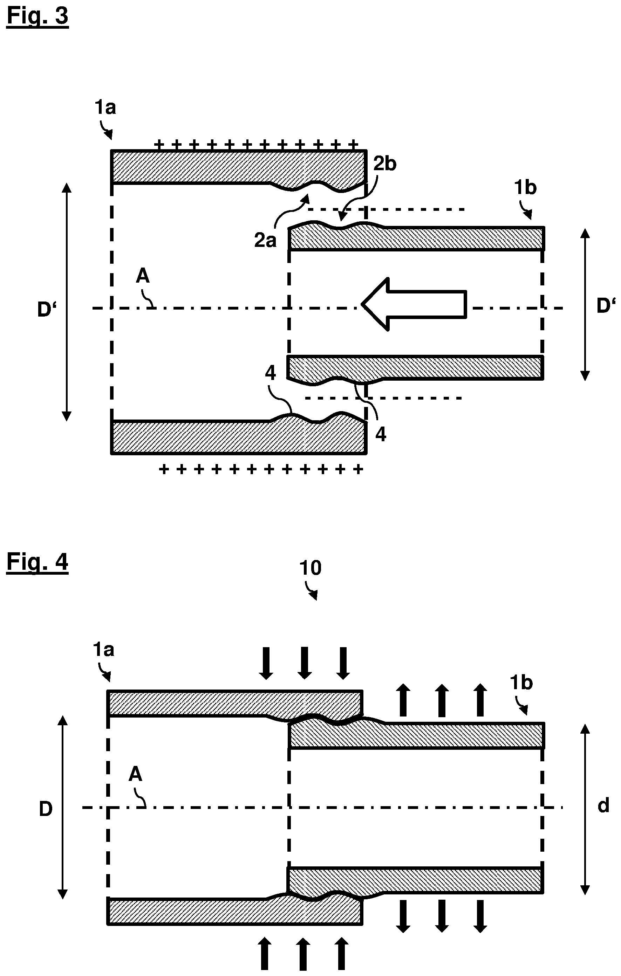

Again referring to Fig. 8, the method M further comprises under M3 sliding both structural profiles 1a, 1b into each other at their respective opening ends 3a, 3b while changed in size such that the structural profiles 1a, 1b overlap at the mating contours 2a, 2b. This can be seen in Fig. 3, where both structural profiles 1a, 1b can now be slid into each other at their respective opening ends 3a, 3b as their respective outer and inner diameters D', d' have changed accordingly. More specifically, the inner diameter D' of the first structural profile 1a is increased (due to the heating) and the outer diameter d' of the second structural profile 1b is decreased (due to the cooling).

Again with reference to Fig. 8, the method M then comprises under M4 reversing the size change of the respective structural profiles 1a, 1b by contraction or expansion such that a form fit and/or an interference fit is formed between the structural profiles 1a, 1b at their mating contours 2a, 2b. As can be seen in Fig. 4, the structural profiles 1a, 1b now have returned to their original sizes. The structural profiles 1a, 1b have been aligned along their mating contours 2a, 2b such that they now interlock with each other by means of the structural elements 4 on their surfaces.

By configuring the outer and inner shapes of the structural profiles 1a, 1b and their mating contours 2a, 2b accordingly, the components can be slid into each other without the application of any forces and without having to rely on special tools. As soon as the final position is reached, the thermal energy is equalized, the parts take back their initial shapes and lock in a form fit. However, by adapting the sizes of the structural profiles 1a, 1b and their mating contours 2a, 2b accordingly, also an interference fit may be achieved at least in portions. If required or beneficial for the respective application, additional clamping forces may be applied or additional fastening means may be added to reinforce the joint.

For example, one or both mating contours 2a, 2b may be covered with an interface sealant before or after the expansion/contraction and before the size change is reversed. In one specific example, an adhesive may be applied on the mating contours 2a, 2b to strengthen the joint between both structural profiles 1a, 1b.

The described method opens up the possibility to fuse fuselage sections of aircraft with each other without having to rely on classical fasteners like rivets or bolts or the like and without drilling etc. To this end, the dimensions of the respective profiles may only need to be changed by several millimeters in size, e.g. in a radial direction. When relying on thermal expansion and contraction, temperature differences of 40°C to 60°C between the mated profiles 1a, 1b may already be sufficient. For example, the first structural profile 1a may be heated up to roughly 40°C, which means that the component can still be touched without the risk of getting burned. The second structural profile 1b may in turn be cooled down in order to increase the temperature difference without having to raise the temperature of one component above or below an unsuitable threshold.

Coming now to Fig. 5, another exemplary embodiment for the application of the described method M is shown. In this example, a first structural profile 1a serves as an outer sleeve for two tube-like second structural profiles 1b or half-shells, which are both joined to the first structural profile 1a by application of the method M of Fig. 8. The first structural profile 1a may, for example, be heated up and the second structural profiles 1b may be cooled down and then slid into each other before the temperatures are brought back to the initial values, thereby locking the fit between the structural profiles 1a, 1b.

The first structural profile 1a serving as a sleeve may, for example, be adapted in the way described in prior art document DE 10 2018 218 039 A1 by combining a helically wound mesh of fiber strands and a matrix material, e.g. a thermoplastic material shrinking under the application of heat. The first structural profile 1a may thus use the principles of what are known as extension sleeves, also referred to as finger traps, which taper under tensile load, and what are known as shrink hoses, which significantly contract under the action of heat, in a synergistic manner for reinforcement or crash-safe introduction of load for structural profiles, in particular structural tubes, in the aircraft sector.

Fig. 6 shows another example for the application of the method M of Fig. 8. In this example, the first structural profile 1a is adapted as a butt strap for coupling the second structural profile 1b adapted as a skin section to another skin section 5 of an aircraft fuselage. All of these components follow a barrel shape of the fuselage and thus represent round structural profiles within the meaning of the present disclosure. The arrangement shown in Fig. 6 is used to compensate tolerances during the assembly of fuselage (barrel) sections via butt joints. The skin-butt strap interface here is supposed to compensate the tolerances of the fuselage skins.

Applying the method M of Fig. 8, the second structural profile 1b may be heated in this example in order to increase its diameter such that it can be slid under the first structural profile 1a in Fig. 6 (which is neither heated nor cooled in this case) without having to apply any forces and without having to use additional tools (see arrows in Fig. 6). As soon as the second structural profile 1b is in place underneath the first structural profile 1a, the component may cool down, thus effectively closing a form fit between the structural profiles 1a, 1b. It is to be understood, of course, that the depicted arrangement is merely an example and various other coupling arrangements with different components of different shapes may be chosen in an actual application.

In the foregoing detailed description, various features are grouped together in one or more examples or examples with the purpose of streamlining the disclosure. It is to be understood that the above description is intended to be illustrative, and not restrictive. It is intended to cover all alternatives and modifications.

Many other examples will be apparent to one skilled in the art upon reviewing the above specification. The embodiments were chosen and described in order to best explain the principles of the invention and its practical applications, to thereby enable others skilled in the art to best utilize the invention and various embodiments with various modifications as are suited to the particular use contemplated.

### List of reference signs

- 1a, 1b: structural profile
- 2a, 2b: mating contour
- 3a, 3b: opening end
- 4: surface element
- 5: skin section
- 6: frame
- 7: clip
- 8: rivet position
- 9: temperature application device
- 10: primary aircraft structure
- A: axial direction
- ΔT: temperature variation
- D, D': inner diameter
- d, d': outer diameter
- M: method
- M1-M4: method steps

## Claims

1. Method (M) for joining curved or angular structural profiles (1a, 1b), which form part of a primary structure (10) of an aircraft, in particular barrel portions of a fuselage, the method comprising:
forming (M1) a first structural profile (1a) with a first mating contour (2a) at a first opening end (3a) and a second structural profile (1b) with a second mating contour (2b) at a second opening end (3b), the first mating contour (2a) being complementary formed to the second mating contour (2b);
changing (M2) a size of at least one of the structural profiles (1a, 1b) at least at the respective mating contour (2a, 2b) by thermal expansion or thermal contraction of the respective structural profile (1a, 1b);
sliding (M3) both structural profiles (1a, 1b) into each other at their respective opening ends (3a, 3b) while changed in size such that the structural profiles (1a, 1b) overlap at the mating contours (2a, 2b); and
reversing (M4) the size change of the respective structural profiles (1a, 1b) by thermal contraction or thermal expansion such that at least one of a form fit or an interference fit is formed between the structural profiles (1a, 1b) at their mating contours (2a, 2b), the respective fit being closed due to the structural profiles (1a, 1b) being brought back to their original size;
wherein the mating contours (2a, 2b) are surface structured such that they interlock via complementary formed surface elements (4) when the size change is reversed.

2. Method (M) according to claim 1, wherein at least one of the mating contours (2a, 2b) is covered by an interface sealant before the size change of the structural profiles (1a, 1b) is reversed.

3. Method (M) according to one of the claims 1 and 2, wherein the structural profiles (1a, 1b) have a generally circular, oval or elliptical arc or ring cross section at the opening ends (3a, 3b).

## Patentansprüche

1. Verfahren (M) zum Verbinden gekrümmter oder winkliger Strukturprofile (1a, 1b), die einen Teil einer Primärstruktur (10) eines Luftfahrzeugs, insbesondere Zylinderabschnitte eines Rumpfes, bilden, wobei das Verfahren Folgendes umfasst:
Bilden (M1) eines ersten Strukturprofils (1a) mit einer ersten passenden Kontur (2a) an einem ersten Öffnungsende (3a) und eines zweiten Strukturprofils (1b) mit einer zweiten passenden Kontur (2b) an einem zweiten Öffnungsende (3b), wobei die erste passende Kontur (2a) komplementär zu der zweiten passenden Kontur (2b) gebildet ist;
Ändern (M2) einer Größe mindestens eines der Strukturprofile (1a, 1b) mindestens an der jeweiligen passenden Kontur (2a, 2b) durch thermische Expansion oder thermische Kontraktion des jeweiligen Strukturprofils (1a, 1b);
Ineinander-Schieben (M3) beider Strukturprofile (1a, 1b) an ihren jeweiligen Öffnungsenden (3a, 3b), während ihre Größe verändert ist, sodass sich die Strukturprofile (1a, 1b) an den passenden Konturen (2a, 2b) überlappen; und
Umkehren (M4) der Größenänderung der jeweiligen Strukturprofile (1a, 1b) durch thermische Kontraktion oder thermische Expansion, so dass zwischen den Strukturprofilen (1a, 1b) an ihren passenden Konturen (2a, 2b) mindestens eines von einem Formschluss oder einer Presspassung gebildet wird, wobei der/die entsprechende Schluss/Passung aufgrund des Zurückbringens der Strukturprofile (1a, 1b) in ihre ursprüngliche Größe geschlossen wird;
wobei die passenden Konturen (2a, 2b) oberflächenstrukturiert sind, sodass sie über komplementär gebildete Oberflächenelemente (4) ineinandergreifen, wenn die Größenänderung umgekehrt wird.

2. Verfahren (M) nach Anspruch 1, wobei mindestens eine der passenden Konturen (2a, 2b) durch ein Grenzflächendichtungsmittel bedeckt wird, bevor die Größenänderung der Strukturprofile (1a, 1b) umgekehrt wird.

3. Verfahren (M) nach einem der Ansprüche 1 und 2, wobei die Strukturprofile (1a, 1b) einen allgemein kreisförmigen, ovalen oder elliptischen Bogen- oder Ringquerschnitt an den Öffnungsenden (3a, 3b) aufweisen.

## Revendications

1. Procédé (M) d'assemblage de profilés structuraux courbes ou angulaires (1a, 1b), faisant partie d'une structure primaire (10) d'un aéronef, en particulier de tronçons de fût d'un fuselage, le procédé comprenant :
la formation (M1) d'un premier profilé structural (1a) en lui conférant un premier contour d'accouplement (2a) au niveau d'une première extrémité ouverte (3a) et d'un deuxième profilé structural (1b) en lui conférant un deuxième contour d'accouplement (2b) au niveau d'une deuxième extrémité ouverte (3b), le premier contour d'accouplement (2a) étant formé de manière complémentaire au deuxième contour d'accouplement (2b) ;
la modification (M2) d'une taille d'au moins l'un des profilés structuraux (1a, 1b) au moins au niveau du contour d'accouplement (2a, 2b) respectif par dilatation thermique ou contraction thermique du profilé structural (1a, 1b) respectif ;
le coulissement (M3) des deux profilés structuraux (1a, 1b) l'un dans l'autre au niveau de leurs extrémités ouvertes (3a, 3b) respectives tandis que leur taille est modifiée de sorte que les profilés structuraux (1a, 1b) se chevauchent au niveau des contours d'accouplement (2a, 2b) ; et
l'inversion (M4) de la modification de la taille des profilés structuraux (1a, 1b) respectifs par contraction thermique ou dilatation thermique de sorte qu'un ajustement par complémentarité de forme et/ou qu'un ajustement avec serrage soit formé entre les profilés structuraux (1a, 1b) au niveau de leurs contours d'accouplement (2a, 2b), l'ajustement respectif étant fermé du fait du retour des profilés structuraux (1a, 1b) à leur taille initiale ;
dans lequel les contours d'accouplement (2a, 2b) sont structurés en surface de sorte qu'ils s'emboîtent au moyen d'éléments de surface (4) formés de manière complémentaire, lors de l'inversion de la modification de la taille.

2. Procédé (M) selon la revendication 1, dans lequel au moins l'un des contours d'accouplement (2a, 2b) est recouvert d'un produit d'étanchéité d'interface avant l'inversion de la modification de la taille des profilés structuraux (1a, 1b).

3. Procédé (M) selon l'une des revendications 1 et 2, dans lequel les profilés structuraux (1a, 1b) présentent une section transversale généralement circulaire, ovale ou elliptique en arc ou annulaire au niveau des extrémités ouvertes (3a, 3b).
